# EUROPEAN PATENT SPECIFICATION

(11) **EP 4 499 551 B1**
(45) Date of publication and mention of the grant of the patent: **31.12.2025**
(21) Application number: 23722706.1
(22) Date of filing: 19.04.2023
(51) Int. Cl.: B66B 13/08, E05D 13/00, F16C 13/00

(54) **SLIDING SYSTEM FOR A DOOR LEAF OF AN ELEVATOR**
SCHIEBESYSTEM FÜR EIN TÜRBLATT EINES AUFZUGS
SYSTÈME COULISSANT POUR UN BATTANT DE PORTE D'UN ASCENSEUR

(30) Priority: 16.05.2022 IT 202200010088
(43) Date of publication of application: 05.02.2025
(73) Proprietor: Wittur Holding GmbH, 85259 Sulzemoos-Wiedenzhausen (DE)
(72) Inventor: BONOLDI, Maros, 43056 Torrile (Parma) (IT); MARTINELLI, Alain, 43058 Sorbolo Mezzani (Parma) (IT); SAINI, Marco, 43013 Pilastro, Langhirano (Parma) (IT)
(74) Representative: Dondi, Silvia
(86) International application number: PCT/IB2023/054008
(87) International publication number: WO 2023/223117

(56) References cited:
- CN-A- 105 293 265
- CN-U- 214 141 164
- US-A- 3 105 272
- US-A1- 2016 340 951
- US-A1- 2022 033 227
- US-B2- 8 640 426

## Description

### Technical field

The present invention relates to a roller and a sliding system for a door leaf of an elevator.

### Background art

Elevator door leaves usually move guided by special guides that determine their sliding direction.

To minimize friction during movement, the sliding action is facilitated by the presence of wheels (or rollers) fixed on the door that roll on said guide. The roller is joined to the door by means of a pin which, through a suitable fastening system, results integral with the door. Through an appropriate rolling system, ball bearing or bushing, the external part of the wheel is allowed to roll on the guide.

In order to use the same roller on different doors, some solutions that represent the state of the art are used.

Some rollers envisage different connecting tools to be used so that the assembly of the roller on the support takes place in an optimal way in consideration of the particular type of door.

Other rollers involve the use of spacers that compensate for the geometric variations of the door structure. CN 105 293 265 A discloses a sliding system according to the preamble of claim 1.

The need for a roller which fits different door models is felt so as to unify the productive process and to increase standardization.

### Disclosure of the invention

In this context, the technical task underlying the present invention is to propose a sliding system for a door leaf of an elevator according to claim 1 which overcomes the drawbacks in the prior art as described above.

According to one embodiment, the first and second connecting portions have a cylinder-like shape and they have different diameters.

According to one embodiment, the first and/or second connecting portion has a lateral surface that is formed by a partially cylindrical surface and at least one flat face.

According to one embodiment, the disk-shaped body comprises a support body on which the first and second connecting portions are obtained at two opposite sides.

According to one embodiment, the support body has an elongated development along a direction substantially parallel to the central rotation axis between a first end and a second end located on the opposite sides of the disk-shaped body. The first and second ends represent the first and second connecting portions.

According to one embodiment, the disk-shaped body comprises a seat as a through-hole in which the support body is fitted.

According to one embodiment, the first and second connecting portions are obtained by directly shaping the disk-shaped body.

According to one embodiment, the roller comprises a through-hole in the disk-shaped body and a pin removably mounted in said through-hole. The first connecting portion is located on the disk-shaped body, the second connecting portion is located on the pin.

According to one embodiment, an end portion of the pin protrudes from the through-hole on an opposite side with respect to the first connecting portion and it is shaped so as to realise the second connecting portion.

### Brief description of drawings

Additional features and advantages of the present invention will become more apparent from the non-limiting description of a preferred, but non-exclusive embodiment of a roller and a sliding system for a door leaf of an elevator, as illustrated in the appended drawings, in which:
- figures 1a, 1b illustrate two perspective views, respectively taken from two opposite sides, of a first embodiment of a roller for a door leaf of an elevator, according to the sliding system of the present invention;
- figure 2a is the frontal view of the roller taken from the side of figure 1a;
- figure 2b is the frontal view of the roller taken from the side of figure 1b;

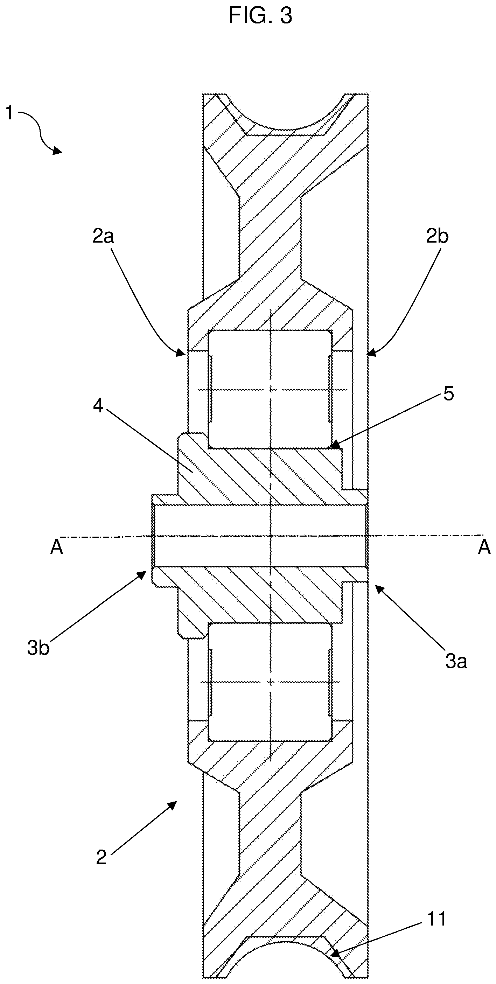

- figure 3 is a cross section of the roller of figures 1a, 1b;
- figures 4a, 4b illustrate two perspective views, respectively taken from two opposite sides, of a second embodiment of the roller, in a first configuration (without the pin);
- figure 5 is a cross section of the roller of figures 4a, 4b;
- figure 6 illustrates a sliding system, according to the present invention,
   wherein the roller of figures 4a, 4b is fixed to a truck;
- figure 7 illustrates the mounting of a pin in the roller of figures 4a, 4b;
- figure 8a, 8b illustrate two perspective views, respectively taken from two opposite sides, of the second embodiment of the roller, in a second configuration (with the pin);
- figure 9 is a cross section of the roller of figures 8a, 8b;
- figure 10 illustrates a sliding system, according to the present invention, wherein the roller of figures 8a, 8b is fixed to a different truck.

### Detailed description of preferred embodiments of the invention

With reference to the figures, number 1 indicates a roller for a door leaf of an elevator.

The roller 1 comprises a disk-shaped body 2 rotatable around a central rotation axis A-A.

The roller 1 advantageously comprises a first connecting portion 3a and a second connecting portion 3b which are located on opposite sides of the disk-shaped body 2. The opposite sides are intended with respect to the central rotational axis A-A.

In particular, the first connecting portion 3a is on a first side 2a of the disk-shaped body 2 and the second connecting portion 3b is on a second side 2b of the disk-shaped body 2.

The first and second sides 2a, 2b of the disk-shaped body 2 are lateral sides, considering a movement direction of the roller 1 in a working condition.

Preferably, the two connecting portions 3a, 3b externally project from their corresponding side 2a, 2b of the disk-shaped body 2.

The two connecting portions 3a, 3b are different in size. In other words, a cross-section of one connecting portion 3a and a cross-section of the other connecting portion 3b have different areas.

Preferably, the two connecting portions 3a, 3b are also different in shape. Preferably, the first and second connecting portions 3a, 3b have a cylinder-like shape. In this case, they have different diameters.

The two connecting portions 3a, 3b are alternatively used for connecting the roller 1 to a carriage (or truck). The carriage connects a door leaf of an elevator with the roller 1 so that the door leaf is able to slide.

According to the present invention, only one connecting portion 3a, 3b at a time is used for connecting the roller 1 with the carriage. The connecting portion 3a, 3b to be used is chosen based on the model of carriage (or truck) to which the roller 1 is going to be connected. In fact, the shapes of the first and second connecting portions 3a, 3b is chosen to match different type of carriages.

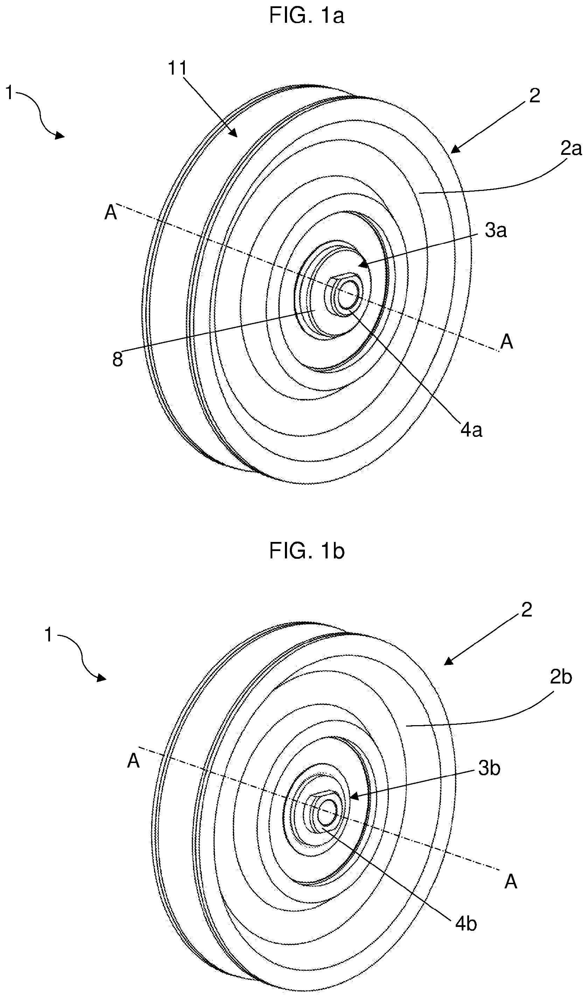

According to a first embodiment, illustrated in figures 1a, 1b, the disk-shaped body 2 comprises a support body 4 on which the first and second connecting portions 3a, 3b are obtained.

According to one embodiment, the support body 4 is fitted in a corresponding seat 5 in the disk-shaped body 2. Preferably, the seat 5 is a through-hole.

The support body 4 has an elongated development along a direction substantially parallel to the central rotation axis A-A between a first end 4a and a second end 4b located on the opposite sides 2a, 2b of the disk-shaped body 2. In particular, the first end 4a is on a first side 2a of the disk-shaped body 2 and the second end 4b is on a second side 2b of the disk-shaped body 2.

In particular, the first and second ends 4a, 4b of the support body 4 are the first and second connecting portions 3a, 3b.

When the seat 5 is a through-hole, the seat 5 has an elongated development along a direction substantially parallel to the central rotation axis A-A. Preferably, the direction of the seat 5 coincide with the central rotation axis A-A.

Preferably, the first and second connecting portions 3a, 3b have a lateral surface formed by a partially cylindrical surface 6 and at least one flat face 7. The flat face 7 works as an anti-rotation system during the fixing of the roller 1 to the roller supports of the door. It avoids the use of a second tool to fix the roller, making it easier and faster.

Preferably, the flat face 7 develops on a plane parallel to the central rotation axis A-A.

According to one embodiment, the support body 4 is made in one piece with the disk-shaped body 2.

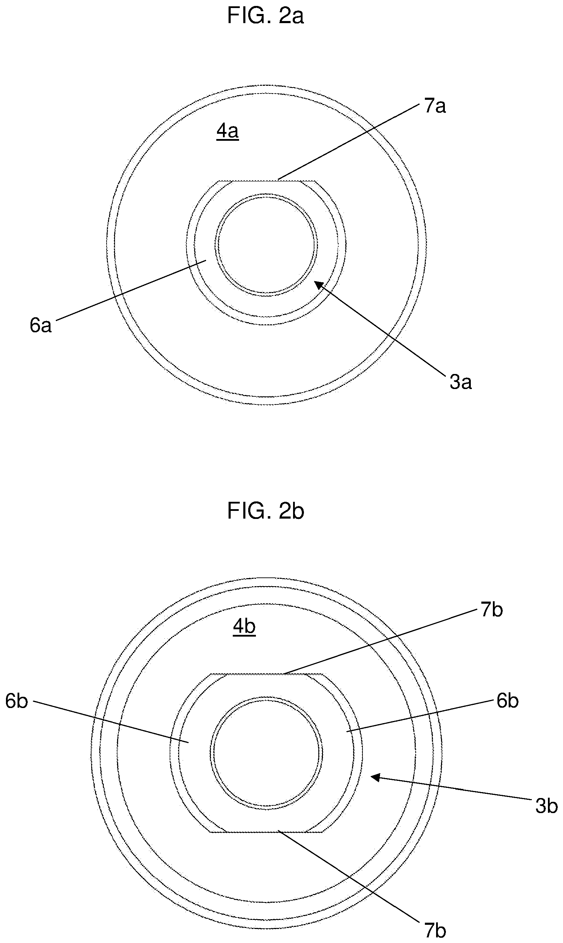

According to one embodiment, illustrated in figures, the first connecting portion 3a has a lateral surface formed by a partially cylindrical surface 6a and a flat face 7a. Considering a cross section of the first connecting portion 3a, that is to say a section orthogonal to the central rotation axis A-A, there is observed a closed curve formed by an arc of a circle whose extremes are connected by a substantially straight line (also called "circular segment"). This is shown in figure 2a.

Preferably, the second connecting portion 3b has a lateral surface that is formed by two flat faces 7b connected by two surfaces 6b that are part of a cylindrical shape.

In this case, considering a cross section of the second connecting portion 3b, there is observed a closed curve composed, in sequence, of a first arc of a circle, a first straight line (or first circular segment), a second arc of a circle and a second straight line (or second circular segment). This is shown in figure 2b.

Preferably, the two flat faces 7b of the second connecting portion 3b develop on planes that are parallel to the central rotation axis A-A.

According to one embodiment, the two flat faces 7b of the second connecting portion 3b have substantially the same area.

According to one embodiment, all the flat faces 7a, 7b have substantially the same area.

According to one embodiment, the two flat faces 7b of the second connecting portion 3b are at opposite sides with respect to the central rotation axis A-A.

Preferably, the flat face 7a of the first connecting portion 3a and one of the flat faces 7b of the second connecting portion 3b are symmetrical with respect to the disk-shaped body 2.

According to one embodiment, the support body 4 comprises a section enlargement 8 which rests against the disk-shaped body 2.

In particular, the section enlargement 8 is located on the first side 2a of the disk-shaped body 2. The first connecting portion 3a originates from the section enlargement 8 and develops away from it.

The section enlargement 8 protrudes out the through-hole 5 on the first side 2a so that the decoupling of the support body 4 from the through hole 5 is prevented.

According to one embodiment, the first and second connecting portions 3a, 3b are obtained by directly shaping the disk-shaped body 2.

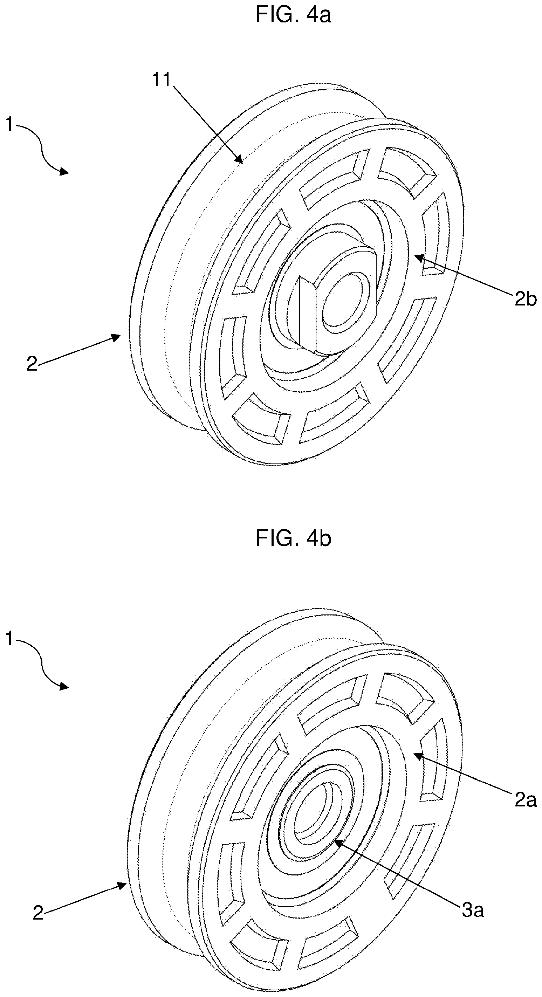

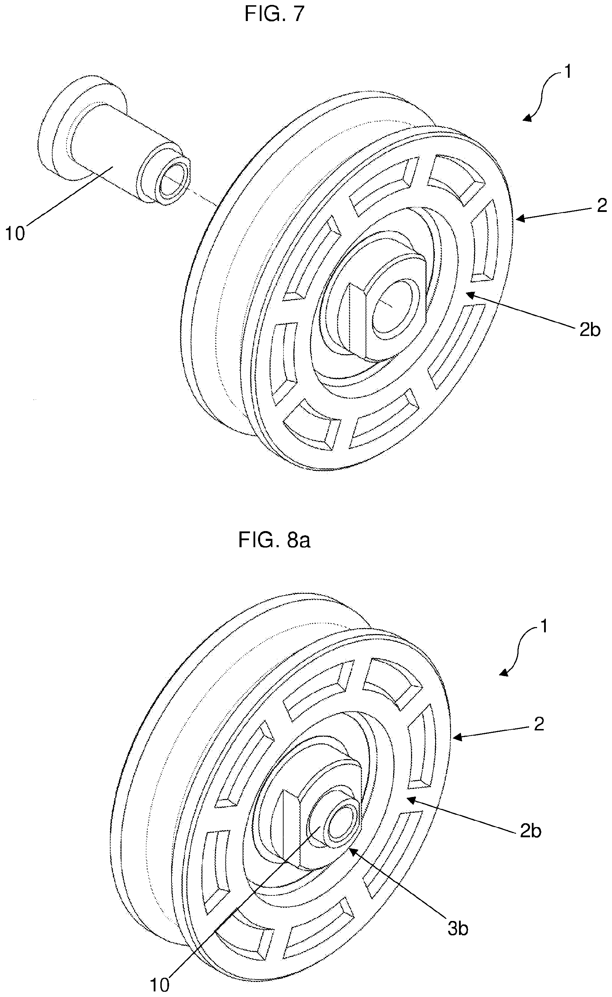

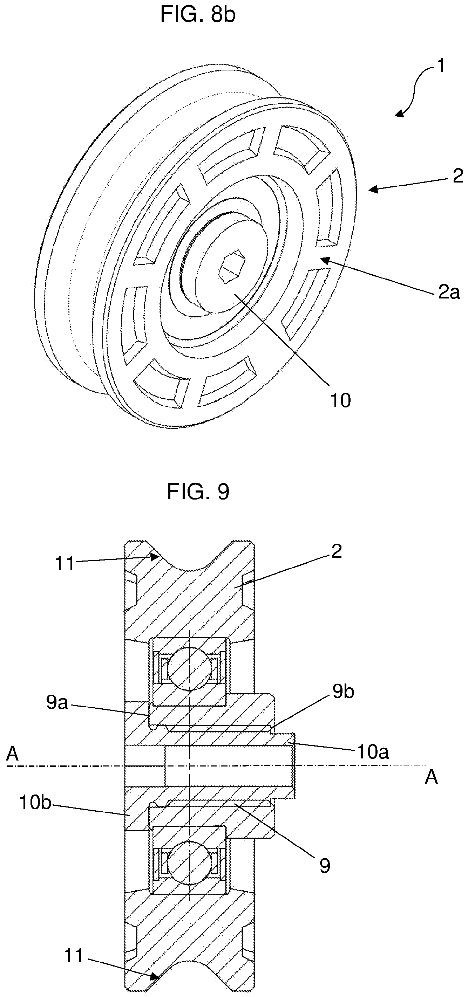

According to a second embodiment, illustrated in figures 4a-10, the roller 1 comprises a through-hole 9 obtained in the disk-shaped body 2 and a pin 10 removably mounted in the through-hole 9. An end portion 10a of the pin 10 realises one of the connecting portions 3a, 3b.

Therefore, the connecting portions 3a, 3b realized by the pin 10 can be changed by simply removing the pin 10 and inserting another pin 10 having a different end shape.

Preferably, both the through-hole 9 and the pin 10 are threaded.

Preferably, the through-hole 9 has an elongated development along a direction substantially parallel to the central rotation axis A-A between a first end 9a and a second end 9b located on the opposite sides 2a, 2b of the disk-shaped body 2. In particular, the first end 9a is on a first side 2a of the disk-shaped body 2 and the second end 9b is on a second side 2b of the disk-shaped body 2.

According to the embodiment illustrated, the first connecting portion 3a is located on the disk-shaped body 2, whereas the second connecting portion 3b is located on the pin 10.

The first connecting portion 3a is on the first side 2a of the disk-shaped body 2. The pin 10 is fitted into the through-hole 9 so that the end portion 10a protrudes from it on the second side 2b of the disk-shaped body 2.

Preferably, the pin 10 comprises a mounting head 10b which is opposite to the end portion 10a. The mounting head 10b is at the first side 2a of the disk-shaped body 2 and at least partially covers the first connecting portion 3a.

In this second embodiment, it's even clearer that only one of the two connecting portions 3a, 3b is available for connection at a time. If the pin 10 is not mounted, the second connecting portions 3b does not exist and the first connecting portion 3a is available. If the pin 10 is mounted, the pin 10 itself obstructs the first connecting portion 3a and the second connecting portion 3b, located on the tip of the pin 10, is available.

This embodiment allows high customizability, but at the same time it keeps the structure simple and light. Indeed, the pin 10 is mounted only when a different connecting portion 3b is needed.

In alternative, the second connecting portions 3b is achieved in combination by the end portion 10a of the pin 10 and the disk-shaped body 2.

Preferably, the disk-shaped body 2, the through hole 9 and the pin 10 share the same rotation axis, that is preferably the central rotation axis A-A.

According to one embodiment, both the two connecting portions 3a, 3b are located on the pin 10, in particular at two opposite sides.

The roller 1 referred to herein is known also as "hanger roller". As it is a known type of roller, it will not be described in detail but it is considered to comprise all the features pertaining to the hanger roller.

In particular, the disk-shaped body 2 comprises an outer portion defining a recess 11 (or groove) that follows its circumferential development around the central rotational axis A-A.

A sliding system 100 for a door leaf of an elevator, according to the present invention, is described below.

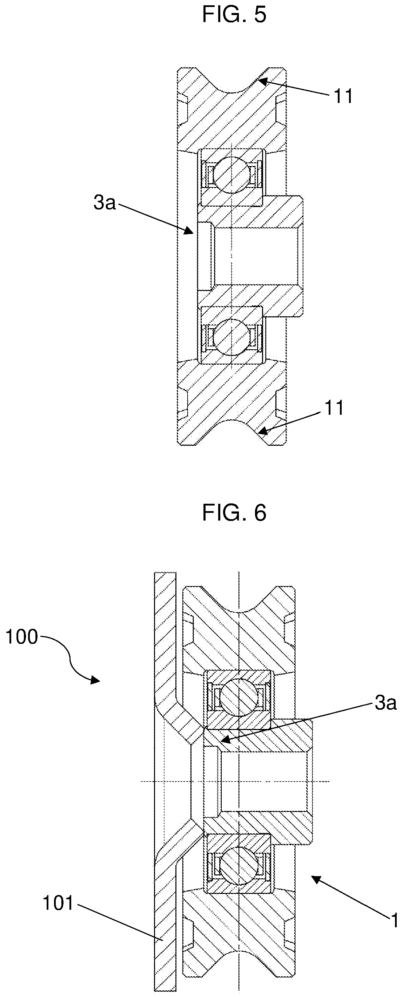

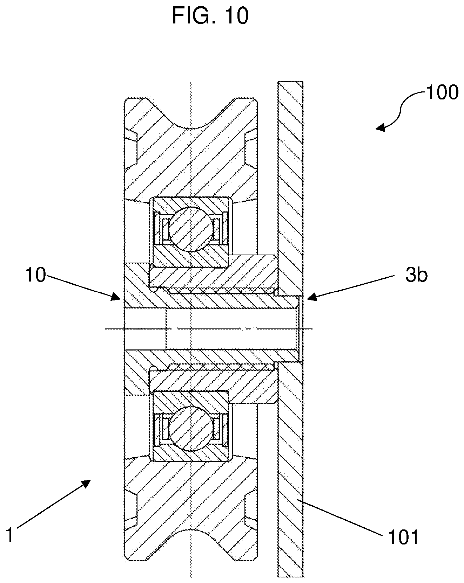

The sliding system 100 comprises at least one truck 101 destined to be associated to a door leaf to make it move along a sliding direction and the roller 1 described above. The roller 1 is mounted on the truck 101 via the first or the second connecting portion 3a, 3b, as illustrated in figures 6 and 10, respectively.

The characteristics of the roller and the sliding system for a door leaf of an elevator, according to the present invention, emerge clearly from the above description, as do the advantages.

In particular, thanks to the different connecting portions provided, the roller can be used with different door models.

In the first embodiment, the two ends of the disk-shaped body/support body are shaped so as to couple with different mechanisms. It is sufficient to rotate the roller side to side and connect the appropriate end.

In the second embodiment, the insertable pin defining a second connecting portion allows to couple the roller with more than two different mechanisms, as the shape of the pin can be changed.

Moreover, the flat faces allow an easier and faster coupling with the door.

## Claims

1. A sliding system (100) for a door leaf of an elevator, comprising:
a roller (1) comprising:
- a disk-shaped body (2) rotatable around a central rotation axis (A-A);
- a first connecting portion (3a) and a second connecting portion (3b) which are located on opposite sides (2a, 2b) of the disk-shaped body (2),
- said first and second connecting portions (3a, 3b) being different in size from each other,
said sliding system (100) further comprising:
a truck (101) connectible to the door leaf and coupled with the first or the second connection portion (3a, 3b) to the roller (1);
the two connecting portions (3a, 3b) of the roller (1) alternatively connecting the roller (1) to the truck (101), only one connecting portion (3a, 3b) at a time being used for connecting the roller (1) with the truck (101), **characterized by** the connecting portion (3a, 3b) to be used being chosen based on the model of the truck (101), the shape of the connecting portions (3a, 3b) being chosen to match different models of the truck (101).

2. The sliding system (100) according to claim 1, wherein the first and second connecting portions (3a, 3b) have a cylinder-like shape and they have different diameters.

3. The sliding system (100) according to claim 1 or 2, wherein said first and/or second connecting portion (3a, 3b) has a lateral surface that is formed by a partially cylindrical surface (6) and at least one flat face (7).

4. The sliding system (100) according to any claims 1 to 3, wherein the disk-shaped body (2) comprises a support body (4) on which the first and second connecting portions (3a, 3b) are obtained at two opposite sides.

5. The sliding system (100) according to claim 4, wherein the support body (4) has an elongated development along a direction substantially parallel to the central rotation axis (A-A) between a first end (4a) and a second end (4b) located on the opposite sides (2a, 2b) of the disk-shaped body (2), said first and second ends (4a, 4b) representing the first and second connecting portions (3a, 3b).

6. The sliding system (100) according to claim 5, wherein the disk-shaped body (2) comprises a seat (5) as a through-hole in which the support body (4) is fitted.

7. The sliding system (100) according to any claims 1 to 3, wherein the first and second connecting portions (3a, 3b) are obtained by directly shaping the disk-shaped body (2).

8. The sliding system (100) according to any claims 1 to 3, wherein the roller (1) comprises a through-hole (9) in the disk-shaped body (2) and a pin (10) removably mounted in said through-hole (9), the first connecting portion (3a) being located on the disk-shaped body (2), the second connecting portion (3b) being located on the pin (10).

9. The sliding system (100) according to claim 8, wherein an end portion (10a) of the pin (10) protrudes from the through-hole (9) on an opposite side with respect to the first connecting portion (3a) and it is shaped so as to realise the second connecting portion (3b).

## Patentansprüche

1. Schiebesystem (100) für ein Türblatt eines Aufzugs, umfassend: eine Rolle (1), die Folgendes umfasst:
- einen scheibenförmigen Körper (2), der rund um eine zentrale Rotationsachse (A-A) drehbar ist;
- einen ersten Verbindungsabschnitt (3a) und einen zweiten Verbindungsabschnitt (3b), die auf entgegengesetzten Seiten (2a, 2b) des scheibenförmigen Körpers (2) befindlich sind,
- wobei sich der erste und der zweite Verbindungsabschnitt (3a, 3b) **in** der Größe voneinander unterscheiden,
wobei das Schiebesystem (100) ferner Folgendes umfasst:
einen Rollenschlitten (101), der mit dem Türblatt verbindbar und mit dem ersten oder dem zweiten Verbindungsabschnitt (3a, 3b) mit der Rolle (1) gekuppelt ist,
wobei die beiden Verbindungsabschnitte (3a, 3b) der Rolle (1) wechselweise die Rolle (1) mit dem Rollenschlitten (101) verbinden, wobei nur jeweils ein Verbindungsabschnitt (3a, 3b) zum Verbinden der Rolle (1) mit dem Rollenschlitten (101) genutzt wird, **dadurch gekennzeichnet, dass** der zu nutzende Verbindungsabschnitt (3a, 3b) basierend auf dem Modell des Rollenschlittens (101) ausgewählt wird und die Form der Verbindungsabschnitte (3a, 3b) passend zu verschiedenen Modellen des Rollenschlittens (101) ausgewählt wird.

2. Schiebesystem (100) nach Anspruch 1, wobei der erste und der zweite Verbindungsabschnitt (3a, 3b) eine zylinderähnliche Form aufweisen und unterschiedliche Durchmesser aufweisen.

3. Schiebesystem (100) nach Anspruch 1 oder 2, wobei der erste und/oder der zweite Verbindungsabschnitt (3a, 3b) eine seitliche Oberfläche aufweist bzw. aufweisen, die durch eine teilweise zylindrische Oberfläche (6) und zumindest eine flache Seitenfläche (7) geformt ist.

4. Schiebesystem (100) nach einem der Ansprüche 1 bis 3, wobei der scheibenförmige Körper (2) einen Stützkörper (4) umfasst, auf dem der erste und der zweite Verbindungsabschnitt (3a, 3b) an zwei entgegengesetzten Seiten ausgebildet sind.

5. Schiebesystem (100) nach Anspruch 4, wobei der Stützkörper (4) eine längliche Entwicklung entlang einer Richtung im Wesentlichen parallel zur zentralen Rotationsachse (A-A) zwischen einem ersten Ende (4a) und einem zweiten Ende (4b), befindlich auf den entgegengesetzten Seiten (2a, 2b) des scheibenförmigen Körpers (2), aufweist, wobei das erste und das zweite Ende (4a, 4b) den ersten und den zweiten Verbindungsabschnitt (3a, 3b) darstellen.

6. Schiebesystem (100) nach Anspruch 5, wobei der scheibenförmige Körper (2) einen Sitz (5) als Durchführungsloch umfasst, in den der Stützkörper (4) eingepasst ist.

7. Schiebesystem (100) nach einem der Ansprüche 1 bis 3, wobei der erste und der zweite Verbindungsabschnitt (3a, 3b) durch direktes Formen des scheibenförmigen Körpers (2) ausgebildet sind.

8. Schiebesystem (100) nach einem der Ansprüche 1 bis 3, wobei die Rolle (1) ein Durchführungsloch (9) in dem scheibenförmigen Körper (2) und einen Zapfen (10) aufweist, der entfernbar in dem Durchführungsloch (9) montiert ist, wobei der erste Verbindungsabschnitt (3a) auf dem scheibenförmigen Körper (2) befindlich ist und der zweite Verbindungsabschnitt (3b) auf dem Zapfen (10) befindlich ist.

9. Schiebesystem (100) nach Anspruch 8, wobei ein Endabschnitt (10a) des Zapfens (10) aus dem Durchführungsloch (9) auf einer in Bezug auf den ersten Verbindungsabschnitt (3a) entgegengesetzten Seite hervorsteht und derart ausgeformt ist, dass er den zweiten Verbindungsabschnitt (3b) bildet.

## Revendications

1. Système coulissant (100) pour un battant de porte d'un ascenseur, comprenant : un rouleau (1) comprenant :
- un corps en forme de disque (2) pouvant tourner autour d'un axe de rotation central (A-A) ;
- une première portion de liaison (3a) et une seconde portion de liaison (3b) qui sont situées sur les côtés opposés (2a, 2b) du corps en forme de disque (2),
- lesdites première et seconde portions de liaison (3a, 3b) étant de tailles différentes l'une de l'autre,
ledit système coulissant (100) comprenant en outre :
un chariot (101) reliable au battant de porte et couplé avec la première ou la seconde portion de liaison (3a, 3b) au rouleau (1) ;
les deux portions de liaison (3a, 3b) du rouleau (1) reliant alternativement le rouleau (1) au chariot (101), uniquement une portion de liaison (3a, 3b) à la fois étant utilisée pour relier le rouleau (1) au chariot (101), **caractérisé par** la portion de liaison (3a, 3b) à utiliser qui est choisie sur la base du modèle du chariot (101), la forme des portions de liaison (3a, 3b) étant choisie pour correspondre à différents modèles du chariot (101).

2. Système coulissant (100) selon la revendication 1, dans lequel les première et seconde portions de liaison (3a, 3b) ont une forme cylindrique et ont des diamètres différents.

3. Système coulissant (100) selon la revendication 1 ou 2, dans lequel ladite première et/ou seconde portion de liaison (3a, 3b) a une surface latérale qui est formée par une surface partiellement cylindrique (6) et au moins une face plate (7).

4. Système coulissant (100) selon l'une quelconque des revendications 1 à 3, dans lequel le corps en forme de disque (2) comprend un corps de support (4) sur lequel les première et seconde portions de liaison (3a, 3b) sont obtenues au niveau de deux côtés opposés.

5. Système coulissant (100) selon la revendication 4, dans lequel le corps de support (4) a un développement allongé le long d'une direction substantiellement parallèle à l'axe de rotation central (A-A) entre une première extrémité (4a) et une seconde extrémité (4b) situées sur les côtés opposés (2a, 2b) du corps en forme de disque (2), lesdites première et seconde extrémités (4a, 4b) représentant les première et seconde portions de liaison (3a, 3b).

6. Système coulissant (100) selon la revendication 5, dans lequel le corps en forme de disque (2) comprend un siège (5) en tant que trou traversant dans lequel le corps de support (4) est ajusté.

7. Système coulissant (100) selon l'une quelconque des revendications 1 à 3, dans lequel les première et seconde portions de liaison (3a, 3b) sont obtenues en façonnant directement le corps en forme de disque (2).

8. Système coulissant (100) selon l'une quelconque des revendications 1 à 3, dans lequel le rouleau (1) comprend un trou traversant (9) dans le corps en forme de disque (2) et un axe (10) monté de manière amovible dans ledit trou traversant (9), la première portion de liaison (3a) étant située sur le corps en forme de disque (2), la seconde portion de liaison (3b) étant située sur l'axe (10).

9. Système coulissant (100) selon la revendication 8, dans lequel une portion d'extrémité (10a) de l'axe (10) fait saillie à partir du trou traversant (9) sur un côté opposé par rapport à la première portion de liaison (3a) et elle est formée de manière à réaliser la seconde portion de liaison (3b).
